# EUROPEAN PATENT APPLICATION

(11) **EP 2 918 440 A1**
(43) Date of publication of application: **16.09.2015**
(21) Application number: 15155703.0
(22) Date of filing: 19.02.2015
(51) Int. Cl.: B60K 37/06, G06F 3/0484, G06F 3/0485, G06F 3/0488

(54) **Vehicle operation apparatus**

(30) Priority: 10.03.2014 JP 2014046609
(71) Applicant: Toyota Jidosha Kabushiki Kaisha, Toyota-shi, Aichi 471-8571 (JP)
(72) Inventor: Shikata, Hiroshi, Toyota-shi, Aichi 471-8571 (JP); Kamiya, Naoki, Toyota-shi,, Aichi 471-8571 (JP)
(74) Representative: TBK

(57) **Abstract**

A vehicle operation apparatus is provided for performing an operation on a screen page displayed on a display device using a touch panel. The vehicle operation apparatus includes an operation determination part configured to determine whether a cursor operation of moving a cursor in the screen page by touching the touch panel by an operation finger and sliding the operation finger on the touch panel or a flick operation of scrolling an operation target in the screen page by touching and flicking the touch panel by the operation finger is performed. The operation determination part is configured to change a threshold for determining the performed operation as the flick operation depending on a position of the cursor.

## Description

### BACKGROUND OF THE INVENTION

### 1. Field of the Invention

The present invention relates to a vehicle operation apparatus.

### 2. Description of the Related Art

A vehicle operation apparatus has been disclosed for performing an operation on a screen page of a display device by performing an operation on a touch panel (regardless of whether it is integrated with or separate from the display device). For example, Japanese Laid-Open Patent Application No. 2010-061224 discloses that a touch panel (touch pad) is separate from a display device and an operation is performed on the display device by using the touch pad.

### SUMMARY OF THE INVENTION

According to one aspect of the present invention, a vehicle operation apparatus is provided for performing an operation on a screen page displayed on a display device using a touch panel. The vehicle operation apparatus includes an operation determination part configured to determine whether a cursor operation of moving a cursor in the screen page by touching the touch panel by an operation finger and sliding the operation finger on the touch panel or a flick operation of scrolling an operation target in the screen page by touching and flicking the touch panel by the operation finger is performed. The operation determination part is configured to change a threshold for determining the performed operation as the flick operation depending on a position of the cursor.

Other objects, features and advantages of the present invention will become more apparent from the following detailed description when read in conjunction with the accompanying drawings.

### BRIEF DESCRIPTION OF THE DRAWINGS

FIG. 1 is a block diagram illustrating one example of a vehicle operation apparatus;
FIG. 2 illustrates one example of a state where a touch pad and a display device are arranged;
FIG. 3 is a plan view generally illustrating the touch pad;
FIG. 4 is a cross-sectional view generally illustrating a part of the touch pad;
FIGs. 5A and 5B illustrate one example of a screen page (operating screen page) displayed on the display device;
FIG. 6 is a flowchart illustrating one example of a process (a flick operation determination process) implemented by the vehicle operation apparatus (a display control part);
FIG. 7 illustrates one example of a method of determining a determination threshold carried out by the display control part when the display device is displaying a map screen page;
FIG. 8 illustrates another example of a method of determining a determination threshold carried out by the display control part when the display device is displaying a map screen page;
FIG. 9 illustrates one example of a method of determining a determination threshold carried out by the display control part when the display device is displaying a list that is scrollable; and
FIG. 10 illustrates another example of a method of determining a determination threshold carried out by the display control part when the display device is displaying a list that is scrollable.

### DETAILED DESCRIPTION OF THE EMBODIMENT

In a case of performing an operation on a screen page by using a touch panel, a cursor operation of moving a cursor or so on the screen page by sliding a finger on the touch panel and a flick operation of scrolling an operation target (a map, a list or so) on the screen page by flicking the touch panel may be performed. In such a case, it is determined based on the moving speed (tracing speed) of the finger on the touch panel whether the cursor operation or the flick operation is performed.

However, when sliding of the finger on the touch panel is performed relatively quickly, the tracing speed reaches a level of being determined as the flick operation and the sliding operation (cursor operation) may be erroneously determined as the flick operation.

Further, if such a configuration is provided that determining the performed operation as the flick operation does not easily occur in order to prevent the cursor operation from erroneously being determined as the flick operation, there may occur a case where the flick operation that is intentionally performed cannot be determined as the flick operation, and thus, the operability may be degraded. Also, it is also possible to distinguish between the cursor operation and the flick operation based on the number of fingers which touch the touch panel by designating the numbers of fingers for respective types of operations such that, for example, the cursor operation should be performed by a single finger, the flick operation should be performed by two fingers, and so forth. However, in this method, degradation in the operability may be unavoidable.

In consideration of this matter, an objective of the embodiment is to provide a vehicle operation apparatus by which, for example, in a case where the cursor operation and the flick operation are performed on a touch panel by one finger, it is possible to positively determine the flick operation that is performed intentionally as the flick operation while preventing the cursor operation from being erroneously determined as the flick operation.

Below, the embodiment of the present invention will be described using drawings.

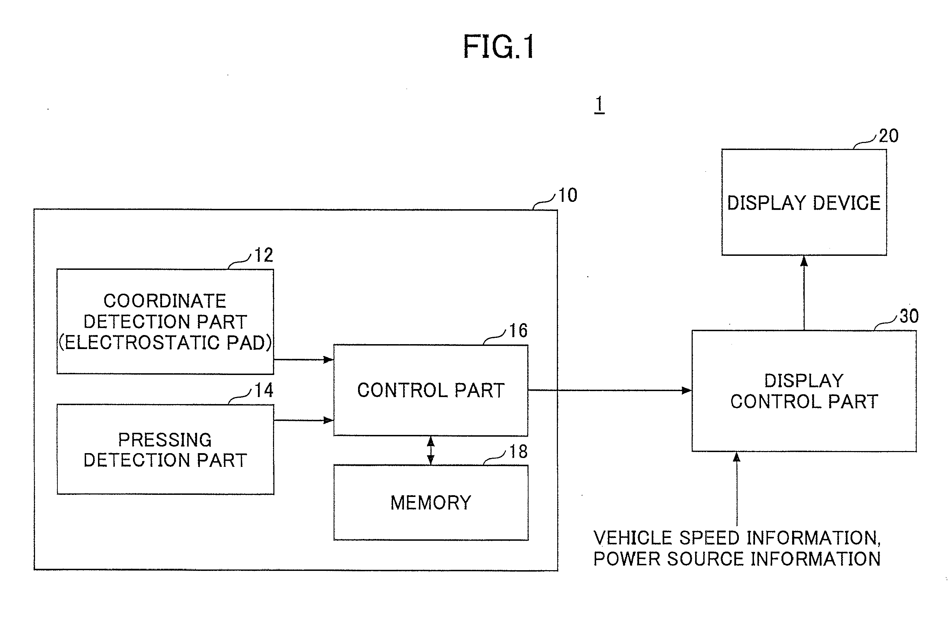

FIG. 1 is a block diagram illustrating one example of a vehicle operation apparatus 1 according to the embodiment.

The vehicle operation apparatus 1 includes a touch pad (touch panel) 10, a display device 20, a display control part 30 and so forth.

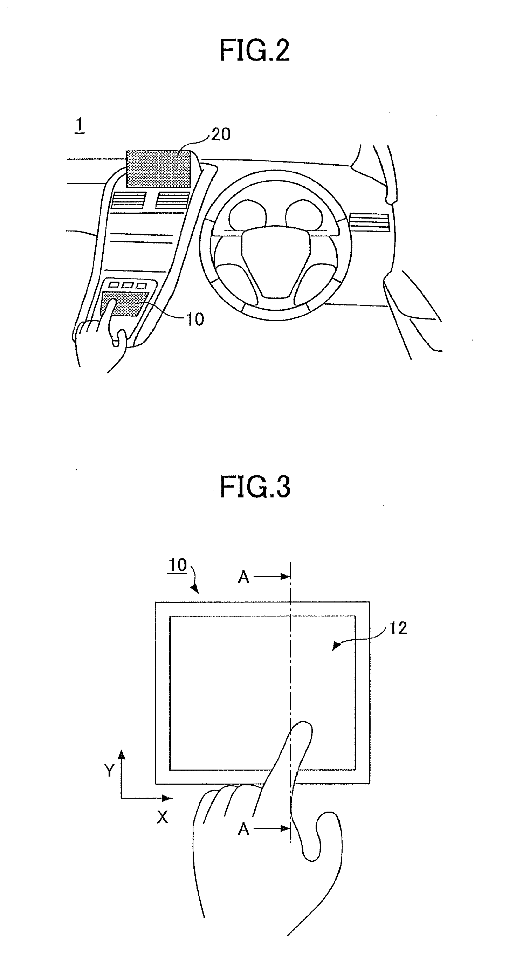

The touch pad 10 is an operating part for performing an operation on a screen page (operating screen page) displayed on the display device 20. The touch pad 10 is installed at an appropriate place in the interior of the vehicle. It is preferable that the touch pad 10 is installed at a position such that the driver can easily operate it (i.e., a position that the driver's hand reaches while the driver is keeping the driving posture). FIG. 2 illustrates one example of a state where the touch pad 10 and the display device 20 are arranged. As shown in FIG. 2, the touch pad 10 can be placed on a console box or around the console box. As shown in FIG. 1, the touch pad 10 includes a coordinate detection part 12, a pressing detection part 14, a control part 16, a memory 18 and so forth.

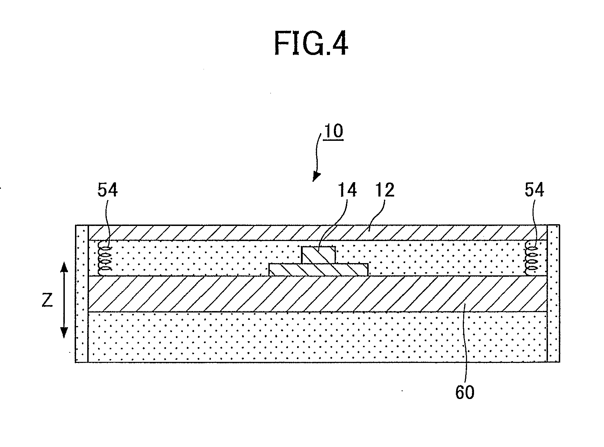

Using FIGs. 3 and 4, the touch pad 10 will be described in detail.

FIG. 3 is a plan view generally illustrating the touch pad 10. FIG. 4 is a cross-sectional view generally illustrating a part of the touch pad 10. Specifically, FIG. 4 illustrates an A-A cross sectional view of FIG. 3.

As shown in FIG. 3, the coordinate detection part 12 has an operating surface (touch operating surface) that is two-dimensionally approximately flat and is a part detecting the coordinate position at which a finger touches the touch operating surface. For example, the coordinate detection part 12 includes an electrostatic sensor and a detection signal thereof is output to the control part 16. For example, the coordinate detection part 12 can be configured by an electrostatic pad. In this case, the electrostatic pad, for example, can have such a structure that electrodes (electrostatic sensors) sandwiching an insulating member linearly extend in respective X-direction and Y-direction on a plane and detection signals thereof (signals corresponding to the variation amount of the charges held in the electrodes) can be output to the control part 16.

The coordinate detection part 12 is configured to be capable of moving in vertical directions (i.e., the Z-directions in FIG. 4). A device (mechanism) for making it possible that the coordinate detection part 12 is capable moving vertically can be anything. In the example illustrated in FIG. 4, the coordinate detection part 12 is supported by a substrate 60 via elastic parts 54 such that the coordinate detection part 12 is configured to be capable of moving vertically. Note that the vertical movement stroke of the coordinate detection part 12 can be any quantity and can be a very small amount, as long as the pressing detection part 14 described later can detect a downward movement of the coordinate detection part 12.

The pressing detection part 14 is a part detecting a downward movement of the coordinate detection part 12. The pressing detection part 14 outputs a signal indicating a downward movement of the coordinate detection part 12 to the control part 16. The pressing detection part 14 can be configured to have, for example, a tact switch or a pressure sensitive sensor (piezoelectric device or so). The pressing detection part 14 can be placed at any place as long as it is touched by the coordinate detection part 12 when the coordinate detection part 12 moves downward. In the example illustrated in FIG. 4, the tact switch, the pressure sensitive sensor or so included in the pressing detection part 14 is installed below the central position of the coordinate detection part 12. It is also possible that the tact switch, the pressure sensitive sensor or so included in the pressing detection part 14 can be such that a plurality of the tact switches, the pressure sensitive sensors or so are placed at distributed positions.

The control part 16 and the memory 18 can be, for example, configured to be a microcomputer.

The control part 16 detects a touch of a finger against the touch operating surface based on the output of the coordinate detection part 12. At this time, the control part 16 generates a coordinate signal indicating the coordinate position in the touch operating surface, i.e., the coordinate signal indicating the coordinate position indicating the touched position (the touched position of the operation finger). Note that when the coordinate detection part 12 is configured to include an electrostatic pad, charges are held in capacitors formed by the electrodes and the operation finger, and the variation amounts of the charges in the respective electrodes vary depending on the position of the operation finger. Therefore, it is possible to determine the position of the operation finger based on the detection signals from the respective electrodes. The generated coordinate signal is output to the display control part 30.

The control part 16 generates a determination signal indicating a fixing operation performed by the operator based on the output signal of the pressing detection part 14. For example, if the pressing detection part 14 is configured to include the pressure sensitive sensor, the control part 16 can detect the fixing operation performed by the operator when the output (pressing pressure) of the pressure sensitive sensor exceeds a threshold and generate the determination signal. If a plurality of the pressure sensitive sensors are placed at distributed places, the control part 16 can detect the fixing operation performed by the operator when the output of any one of the pressure sensitive sensors exceeds a threshold and generate the determination signal. If the pressing detection part 14 is configured to include the tact switch, the control part 16 can detect the fixing operation performed by the operator when an ON signal is input from the tact switch and generate the determination signal. If a plurality of the tact switches are placed at distributed places, the control part 16 can detect the fixing operation performed by the operator when an ON signal is input from any one of the tact switches and generate the determination signal. The generated determination signal is transmitted to the display control part 30.

Returning to FIG. 1, the display device 20 is placed at a position remote from the touch pad 10 and displays the operating screen page that can be operated using the touch pad 10. The display device 20 can be placed at a position in the interior of the vehicle such that the display device 20 can be easily viewed by the operator (driver). For example, as shown in FIG. 2, the display device 20 can be placed on an instrument panel. The display device 20 can be a display part that displays the operating screen page directly in the operator's visual field such as a heads-up display (HUD). On the display device 20, the operating screen page is displayed which shows operating contents that can be operated using the touch pad 10. Note that the display device 20 can display, as the background of the operating screen page, a picture of a TV or a perimeter monitoring camera, or so. It is also possible that the display device 20 can display a picture of a TV or a perimeter monitoring camera, or so, when the operating screen page is not displayed.

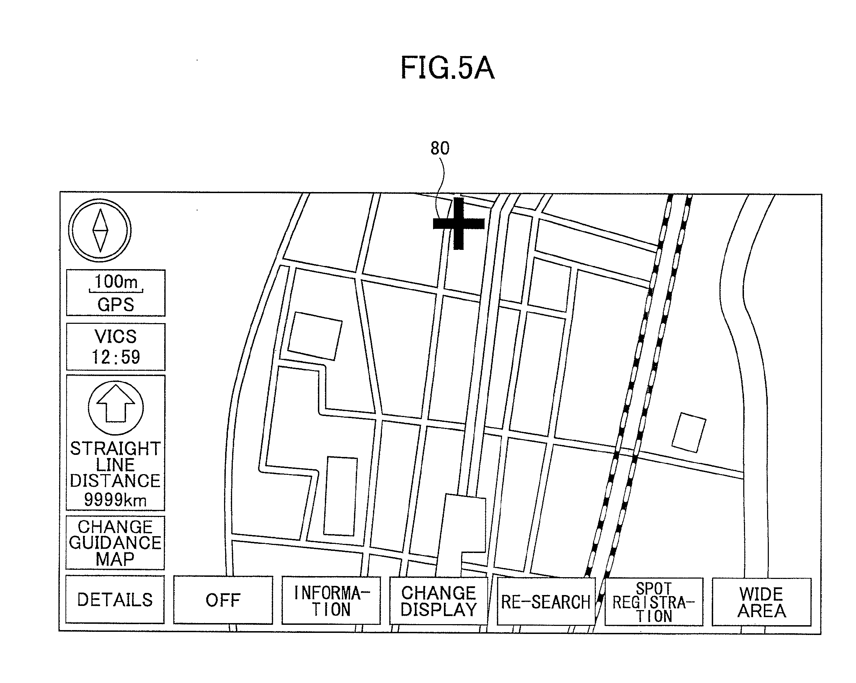

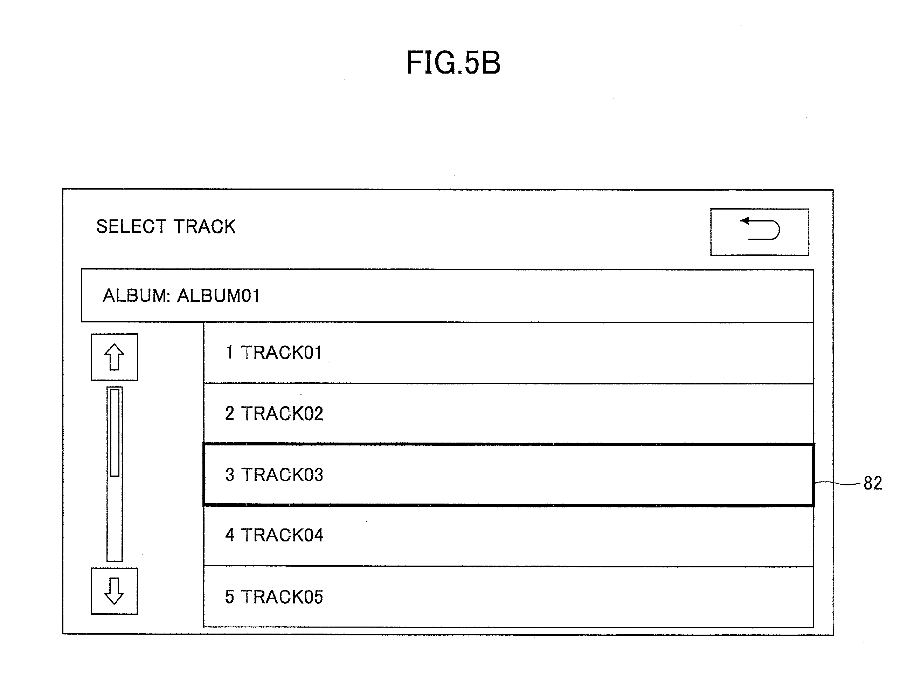

Using FIGs. 5A and 5B, the operating screen page displayed on the display device 20 will be described. FIGs. 5A and 5B illustrate one example of a screen page (the operating screen page) displayed on the display device 20. FIG. 5A illustrates a map screen page of a navigation system. FIG. 5B illustrates a track (music) selecting screen page of an audio system. Note that the operating screen page can be displayed, as shown in FIGs. 5A and 5B, on the whole screen of the display device 20. The operating screen page can be displayed also on a part of the screen of the display device 20. Note that, below, the expressions concerning directions, i.e., "upper" or "upward", "lower" or "downward", "left" or "leftward and "right" or "rightward", mean "upper" or "upward", "lower" or "downward", "left" or "leftward and "right" or "rightward" on the screen of the display device 20.

As shown in FIG. 5A, a map is displayed on the whole screen of the display device 20, and respective points on the map can be selected as a result of the operator moving a pointer (cursor) 80 using the touch pad 10. For example, by moving the pointer 80 to a desired position on the map, the operator can select a starting point and/or a destination in the navigation system, select a position of a facility for which detailed information should be displayed, or so. At this time, the operator can cause the starting point and/or destination or the facility for which detailed information should be displayed, or so, to be fixed by performing the fixing operation at the desired position on the map using the touch pad 10. It is also possible to scroll the map displayed on the screen of the display device 20 (map scrolling) by performing an operation on the touch pad 10. At a left edge part and a bottom edge part of the screen of the display device 20, icons (virtual buttons) indicating selecting items that are operable operating targets are displayed. For example, by moving the pointer 80 to the icon "change display" (selecting operation) and performing the fixing operation, the operator can change the display method of the map (for example, from a two-dimensional display to a three-dimensional display). Note that, below, also respective points on the map screen page may be described as the selecting items as the operating targets.

As shown in FIG. 5B, respective tracks in a music source for which sound output is available by the audio system are listed in the downward direction as the selecting items as the operating targets. By moving the cursor 80 through the touch pad 10, the operator can select the respective tracks. Also, the respective tracks in the list as the selecting items as the operating targets can be scrolled. By performing an operation on the touch pad 10, the operator can scroll the respective tracks in the list (list scrolling). In this example, five tunes (from the first tune to the fifth tune) as the tracks contained in an "ALBUM01" are displayed as a list, and FIG. 5B shows a state where the cursor 82 is placed at the third tune the "TRACK03", i.e., "TRACK03" is selected. By performing "list scrolling", the operator can cause the tracks of the sixth tune and the subsequent tunes to be displayed and select one thereof. The number of tunes displayable in a list on the screen, the contents of tunes displayed in a list on the screen, a specific manner of displaying tunes in a list on the screen, and so forth, can be freely determined. Also, a specific manner of "list scrolling" can be freely determined. For example, it is possible that "list scrolling" is carried out in a rotating drum manner or a manner where "list scrolling" is terminated at each of both ends.

Thus, on the operating screen page, a plurality of the selecting items (operating targets) are displayed. By placing the cursor at the selecting item (the selecting operation) and performing the fixing operation using the touch pad 10, the operator can cause the operation contents of the corresponding one of the respective selecting items to be implemented. Also, there can be a group of the selecting items (i.e., the list or the map) which can be scrolled as a result of the operator performing an operation on the touch pad 10. Note that the selecting items can be those concerning any types (functions). In other words, the contents to be able to be operated using the touch pad 10 can be any contents. For example, the selecting items can include those for carrying out various settings of an air conditioner and the selecting item for displaying the corresponding screen page on the display device 20.

The display control part 30 is a control part for controlling a screen page displayed on the display device 20. According to the embodiment, the display control part 30 synchronizes the display device 20 with the touch pad 10 and assists an operation performed on the display device 20. Specifically, the display control part 30 displays, on the display device 20, the operating screen page, and also, carries out a selecting process of selecting the various selecting items, a fixing process therefor, a scrolling process therefor ("list scrolling", "map scrolling" and so forth) and so forth based on the signals from the touch pad 10 (the coordinate signal, the determination signal and so forth). For example, as a result of the operator touching the touch operating surface of the touch pad 10 by his or her finger and performing an operation of sliding the finger on the touch operating surface (i.e., the selecting operation), the display control part 30 responds to this operation, moves the cursor (that can be the pointer) on the operating screen page and causes a state to occur where any one of the selecting items is selected. Thus, in response to the operator's selecting operation, the display control part 30 executes a selecting function (the selecting process). Also, as a result of the operator performing an operation of pressing the touch pad 10 (the fixing operation) in a state where any one of the selecting items is thus selected, the display control part 30 implements the operation contents of the thus selected selecting item. That is, the display control part 30 executes s fixing function in response to the fixing operation (the fixing process). As a result of the operator performing an operation of flicking the touch operating surface by his or her finger while touching the touch operating surface by the finger (a flick operation) in a state where the map screen page or a "list scrollable" list is displayed on the display device 20, the display control part 30 responds to this operation and scrolls the map or the list. In other words, the display control part 30 responds to this operation and executes a scrolling function (the scrolling process). Note that, the term "cursor" used below also means the "pointer" unless otherwise specified.

More specifically, when receiving the coordinate signal corresponding to the selecting operation of the operator from the touch panel 10 in a state where the operating screen page is displayed on the display device 20, the display control part 30 causes a state to occur where any one of the selecting items in the operating screen page is selected. In other words, the display control part 30 determines the position of the cursor. At this time, the display control part 30 can operate in a "relative coordinate mode" or an "absolute coordinate mode".

The "relative coordinate mode" means a mode where the coordinate system of the screen of the display device 20 is synchronized with the coordinate system of the operating surface of the touch pad 10 in a relative synchronization manner. Typically, in the relative coordinate mode, the coordinate systems of the screen of the display device 20 and the operating surface of the touch pad 10 are associated with each other in such a manner that the origin of the coordinate system of the display device 20 is positioned at the current position of the cursor while the origin of the coordinate system of the operating surface of the touch pad 10 is positioned at the current touched position of a finger. For example, when the operator touches his or her finger on the operating surface of the touch pad 10 and slides the finger downward thereon, the cursor on the screen of the display device 20 moves downward from the currently displayed position on the screen. At this time, according to the distance of sliding the finger on the operating surface, the moving distance of the cursor on the screen of the display device 20 is determined.

On the other hand, the "absolute coordinate mode" is such a mode that the coordinate system of the screen of the display device 20 is associated with the coordinate system of the operating surface of the touch pad 10 in an absolute synchronization manner (i.e., the respective points are associate with each other between the respective coordinate systems in a one-to-one correspondence manner). Typically, in the absolute coordinate mode, the coordinate systems of the screen of the display device 20 and the operating surface of the touch pad 10 are associated with each other in such a manner that the origin of the coordinate system of the screen of the display device 20 is positioned at a fixed position while the origin of the coordinate system of the operating surface of the touch pad 10 is positioned at a fixed position. For example, the coordinate system of the screen of the display device 20 where the origin is fixed at the bottom left corner of the screen of the display device 20 can be associated with the coordinate system of the operating surface of the touch pad 10 where the origin is fixed at the bottom left corner of the operating surface of the touch pad 10. At this time, when the operator touches the operating surface of the touch pad 10 by his or her finger, the cursor moves to the coordinates on the screen of the display device 20 corresponding to the coordinates of the operating surface of the touch pad 10 at which the finger is thus touching the operating surface. When the operator slides the finger downward from this state, the cursor on the screen of the display device 20 moves downward from the previous position to which the cursor was moved as mentioned above. Note that since generally the size of the screen of the display device 20 is not the same as the size of the operating surface of the touch pad 10, the correspondence relation between the respective coordinate systems can be a proportional relation according to the size ratio therebetween.

When receiving the determination signal from the touch pad 10 in a state where the operating screen page is displayed on the display device 20, the display control part 30 implements the fixing process, i.e., the operation contents of the selected selecting item. Note that the operation contents depend on the selecting item, and also, can be accompanied by a transition of the screen page such as to display subordinate selecting items, change the operating screen page, or so, a process for inputting letters, a start of an application, a process of transmitting a control signal to an operation target apparatus (for example, the air conditioner), or so.

Further, the display control part 30 executes scrolling a group of the selecting items (such as the map, the list or so) when receiving the coordinate signal corresponding to the operator's flick operation from the touch pad 10 in a state where the operating screen page that includes the group of the selecting items that are scrollable is displayed on the display device. Note that when the flick operation is performed, in a case of the map, for example, "map scrolling" can be carried out in a direction approximately the same as the operation direction of the flick operation (i.e., the moving direction of the operation finger). In a case of the list, the operation direction of the flick operation and the direction of "list scrolling" can be previously associated with each other, and then, "list scrolling" can be carried out in the direction according to the associating. For example, when the list is present for which "list scrolling" is carried out in the upward and downward directions in the operating screen page, "list scrolling" can be carried out in the upward direction if the flick operation is performed in a direction that is different upward from the leftward or rightward direction of the screen (for example, an upward and leftward direction). Similarly, "list scrolling" can be carried out in the downward direction if the flick operation is performed in a direction that is different downward from the leftward or rightward direction of the screen (for example, a downward and leftward direction).

Note that the display control part 30 is configured to be, for example, a microcomputer, and can perform various control processes described above as a result of a CPU executing various programs stored by a ROM. A part or all of the functions of the display control part 30 can be implemented by the control part 16 of the touch pad 10, another control part in the display device 20, or so. Also, a part or all of the functions of the control part 16 of the touch pad 10 can be implemented by the display control part 30. Further, to the display control part 30, vehicle speed information indicating the vehicle speed, power supply information concerning the states of vehicle power supplies (IG, ACC or so), or so, can be input, as is necessary.

Thus, according to the touch pad 10 in the present embodiment, the operator can select the desired selecting item by touching the operating surface of the coordinate detection part 12 by the operation finger (for example, the index finger) and moving the operation finger within the operating surface while viewing the display device 20. Then, the operator can perform the fixing operation by pressing the coordinate detection part 12 by the operation finger when a state occurs where the desired selecting item is selected. If a group of the selecting items that are scrollable are displayed on the display device 20 but the desired selecting item is not displayed there, the operator can scroll the group of the selecting items by performing a flick operation of flicking a finger while touching the operating surface of the coordinate detection part 12 by the operation finger. Thus, the operator can cause the desired selecting item to be displayed on the display device 20 and perform the above-described selecting operation and fixing operation.

Next, a characteristic process carried out by the vehicle operation apparatus 1 (the display control part 30) will be described. Specifically, a process of determining whether the selecting operation (a cursor operation) or the flick operation is performed will be described now. That is, the cursor operation and the flick operation are completely different when they are viewed from the operator. However, when they are viewed from the vehicle operation apparatus 1 (the display control part 30), the cursor operation and the flick operation are both detected as operations of moving the operation finger on the operating surface. Therefore, the display control part 30 cannot determine which operation is performed only by using the simple coordinate signal. Therefore, in a process of determining the flick operation described later, the display control part 30 determines the flick operation based on the moving speed of the operation finger on the touch operating surface of the touch pad 10.

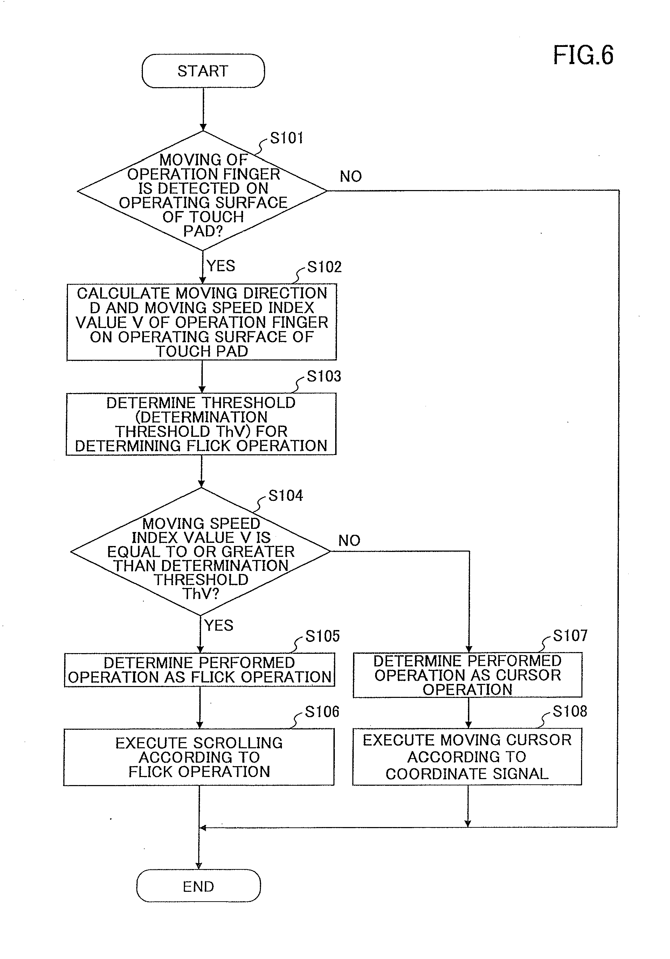

FIG. 6 is a flowchart illustrating one example of a process (a flick operation determination process) implemented by the vehicle operation apparatus (the display control part 30). This process flow can be executed each time when the display control part 30 receives the coordinate signal in response to the operator's operation on the touch pad 10 in a state where an operation on the operating screen page displayed on the display device 20 is allowed and the display device 20 is displaying the operating screen page. Note that the control part 16 of the touch pad 10 outputs the coordinate signal every update period and the display control part 30 receives the coordinate signal every update period.

As shown in FIG. 6, in Step S101, the display control part 30 determines whether moving of the operation finger on the operating surface of the touch pad 10 is detected. For example, it is possible to determine whether the operation finger moves on the operating surface of the touch pad 10 based on the currently received coordinate signal and the coordinate signal received in the past (for example, the previously received coordinate signal) in a state where the operation finger touches the operating surface. When moving of the operation finger on the operating surface of the touch pad 10 is thus detected, the display control part 30 proceeds to Step S102. When moving of the operation finger on the operating surface of the touch pad 10 is not detected, the display control part 30 finishes the current process since none of the cursor operation and the flick operation is performed. Note that if the display control part 30 determines, based on the coordinate signal, that there is no touch of the operation finger on the operating surface of the touch pad 10, the display control part 30 can regard this as there being no moving of the operation finger and finish the current process.

In Step S102, the display control part 30 calculates the moving direction D and the moving speed index value V of the operation finger on the operating surface of the touch pad 10. The moving speed index value V is an index value indicating the speed of moving of the operation finger on the operating surface. For example, the moving speed index value V can be the moving distance (the distance in the coordinate system of the touch pad 10) from when receiving the coordinate signal previously to when receiving the coordinate signal currently. Also, concerning the coordinate signals received in the past N times, the moving speed index value can be an average of the moving distances each from when receiving the coordinate signal to when receiving the coordinate signal next. The moving direction D can be calculated as an angle from a predetermined axis, for example, the x-axis or y-axis in the coordinate system of the operating surface of the touch pad 10 based on the coordinate position of the operating finger corresponding to the previously received coordinate signal and the coordinate position of the operating finger corresponding to the currently received coordinate signal.

Next, in Step S103, the display control part 30 determines a threshold for determining the flick operation ("determination threshold ThV"). As described above, in order to distinguish between the cursor operation and the flick operation, it is necessary to make the determination due to a difference in the moving speed of the operation finger. In other words, it is possible to determine the thus performed operation as the flick operation when the operation finger moves at a speed equal to or higher than a predetermined speed. Here, in order to determine whether or not the thus performed operation corresponds to the flick operation, the determination threshold ThV is determined for the moving speed index value V. Specifically, the display control part 30 changes the determination threshold ThV depending on the position of the cursor on the operating screen page. The details of the specific method of determining the determination threshold ThV will be described later.

Next, in Step S104, the display control part 30 determines whether the moving speed index value V is equal to or greater than the determination threshold ThV. When the moving speed index value V is equal to or greater than the determination threshold ThV, the display control part 30 proceeds to Step S105, determines that the operator's operation on the operating surface of the touch pad 10 is the flick operation and proceeds to Step S106. On the other hand, when the moving speed index value V is less than the determination threshold ThV, the display control part 30 proceeds to Step S107, determines that the operator's operation on the operating surface of the touch pad 10 is the cursor operation, and proceeds to Step S108.

In Step S106, the display control part 30 carries out scrolling of the group of the selecting items (the map, the list or so) corresponding to this flick operation.

On the other hand, in Step S108, the display control part 30 carries out moving the cursor according to the coordinate signal.

Thus, the vehicle operation apparatus 1 (the display control part 30) determines whether the cursor operation or the flick operation is performed based on the moving speed of the operation finger on the operating surface of the touch pad 10.

Next, the above-described method of determining the determination threshold ThV by the vehicle operation apparatus 1 (the display control part 30) will be described.

First, one example of the method of determining the determination threshold ThV by the display control part 30 when the display device 20 is displaying the map screen page will be described.

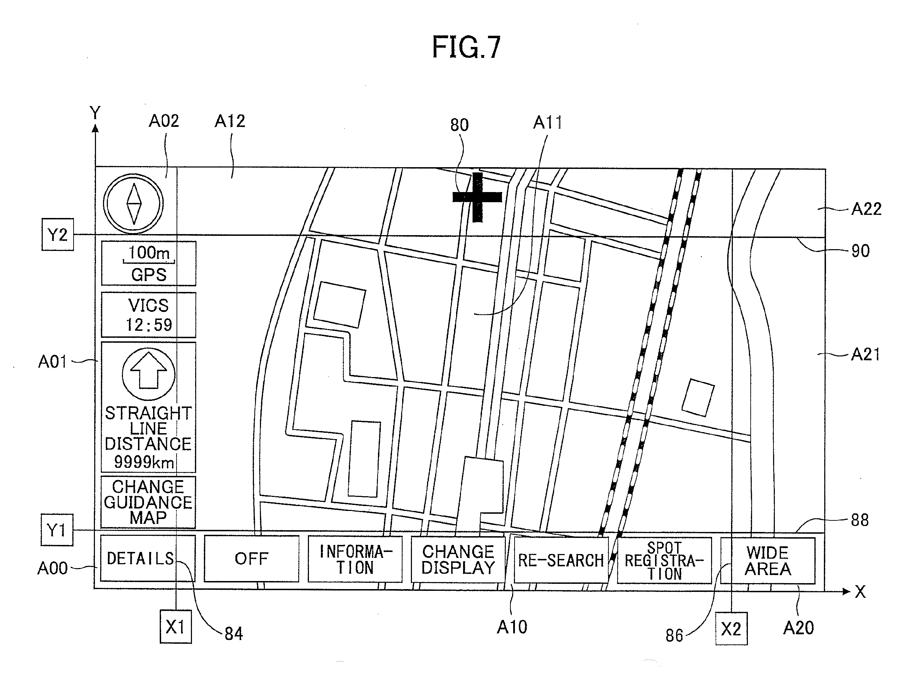

FIG. 7 illustrates one example of a method of determining a determination threshold carried out by the display control part 30 when the display device 20 is displaying the map screen page. Specifically, virtual lines 84, 86, 88 and 90 are drawn on the map screen page of the navigation shown in FIG. 5A and the virtual lines 84, 86, 88 and 90 divide the map screen page into nine areas. Specifically, the nine areas are a lower left area A00, a left area A01, an upper left area A02, a lower area A10, a central area A11, an upper area A12, a lower right area A20, a right area A21 and an upper right area A22. FIG. 7 shows an x-y coordinate system, the origin of which is the bottom left corner of the map screen page. The virtual lines 84 is a straight line parallel to the y-axis and having the x-coordinate value of "X1". The virtual lines 86 is a straight line parallel to the y-axis and having the x-coordinate value of "X2". Note that the relationship X1<X2<W holds in a case where the x-coordinate value of the right end of the map screen page is "W". The virtual lines 88 is a straight line parallel to the x-axis and having the y-coordinate value of "Y1". The virtual lines 90 is a straight line parallel to the x-axis and having the y-coordinate value of "Y2". Note that the relationship Y1<Y2<H holds in a case where the y-coordinate value of the top end of the map screen page is "H". That is, the lower left area A00 is an area in the map screen page defined by 0≦X<X1 and 0≦Y<Y1. The left area A01 is an area in the map screen page defined by 0≦ X<X1 and Y1≦Y<Y2. The upper left area A02 is an area in the map screen page defined by 0≦X<X1 and Y2≦Y≦H. The lower area A10 is an area in the map screen page and defined by X1≦X<X2 and 0≦Y<Y1. The central area A11 is an area in the map screen page defined by X1≦X<X2 and Y1 ≦Y<Y2. The upper area A12 is an area in the map screen page defined by X1≦X<X2 and Y2≦Y≦H. The lower right area A20 is an area in the map screen page defined by X2≦ X≦W and 0≦Y<Y1. The right area A21 is an area in the map screen page defined by X2≦X≦W and Y1≦Y<Y2. The upper right area A22 is an area in the map screen page defined by X2≦X≦W and Y2≦Y≦H. Note that which of the areas divided by the virtual lines 84, 86, 88 and 90 includes the position accurately on each of the virtual lines 84, 86, 88 and 90 can be freely determined.

As described above, the vehicle operation apparatus 1 (the display control part 30) according to the present embodiment changes the determination threshold ThV depending on the position of the cursor on the operating screen page. In the example of FIG. 7, the display control part 30 reduces the determination threshold ThV when the position of the pointer (the cursor) 80 is in the outer area of the map screen page (i.e., the lower left area A00, the left area A01, the upper left area A02, the lower area A10, the upper area A12, the lower right area A20, the right area A21 or the upper right area A22) in comparison to the central area A11 of the map screen page. That is, when the position of the pointer 80 is in the outer area of the map screen page, the display control part 30 more easily determines the performed operation as the flick operation than the central area A11. In other words, the display control part 30 changes the determination threshold ThV in such a manner that, the farther the position of the cursor on the operating screen page becomes away from the center of the operating screen page, the more easily the display control part 30 determines the performed operation as the flick operation. That is, the display control part 30 reduces the determination threshold ThV as the position of the cursor becomes farther away from the center of the operating screen page.

Thereby, the display control part 30 can positively determine the intentionally performed flick operation as the flick operation while avoiding erroneously determining the cursor operation as the flick operation. That is, when the pointer 80 is in the central area A11 of the map screen page, the cursor operation is likely to be performed more than the flick operation. Therefore, by setting the determination threshold ThV to be high, the display control part 30 can avoid erroneously determining the cursor operation, performed relatively quickly, as the flick operation. On the other hand, when the pointer 80 is in the outer area of the map screen page, this state is a state occurring after the pointer 80 is moved toward the outer area. Therefore, scrolling by the flick operation becomes likely to be performed. Thus, by setting the determination threshold ThV lower than that of the central area A11, the display control part 30 comes to more easily determine the performed operation as the flick operation and can positively determine the intentionally performed flick operation as the flick operation.

In this example, the display control part 30 changes the determination threshold ThV to reduce it as the position of the cursor becomes farther away from the center of the map screen page in two stages, i.e., the central area A11 and the outer area. However, it is also possible that the display control part 30 changes the determination threshold ThV more finely. At this time, it is also possible to change the determination threshold ThV continuously or in a step-by-step manner.

Next, another method of determining the determination threshold ThV by the display control part 30 when the display device 20 is displaying the map screen page will be described. In this example, display control part 30 changes the determination threshold ThV based on, in addition to the position of the cursor on the operating screen page, the moving direction D of the operation finger on the operating surface of the touch pad 10.

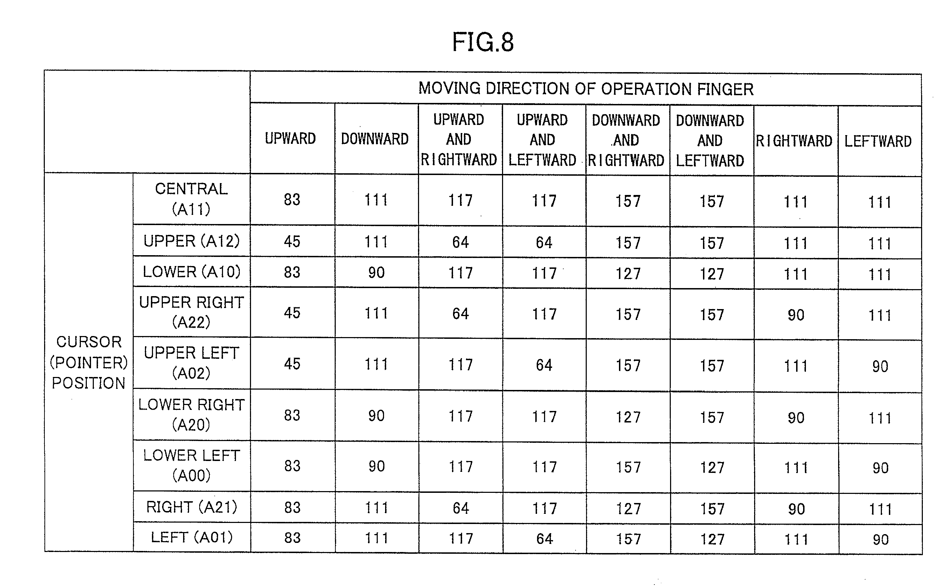

FIG. 8 illustrates another example of the method of determining the determination threshold ThV carried out by the display control part 30 when the display device is displaying the map screen page.

Specifically, FIG. 8 illustrates a map for determining the determination threshold ThV similar to the above-described example and this example is configured so as to be able to determine the determination threshold ThV using a relationship between the position of the pointer 80 on the map screen page and the moving direction D of the operation finger. Respective items of the cursor (the pointer 80) position in this table denote, from the top, the central area A11, the upper area A12, the lower area A10, the upper right area A22, the upper left area A02, the lower right area A20, the lower left area A00, the right area A21 and the left area A01 in the map screen page described above shown in FIG. 7. Also, respective items of the moving direction D of the operation finger on the operating surface of the touch pad 10 denote, from the left, the upward direction, the downward direction, the upward and rightward direction, the upward and leftward direction, the downward and rightward direction, the downward and leftward direction, the rightward direction and the leftward direction. Note that the directions in the respective items of the moving direction D are prescribed to have, not specific directions but predetermined ranges (of angle). For example, the upward direction can be prescribed as directions included in a range of an angle measured clockwise and counterclockwise from the y-axis plus direction (i.e., the direction of increasing the y-coordinate) of FIG. 7. The upward and rightward direction can be prescribed as directions included in a range of an angle measured clockwise and counterclockwise from the diagonal direction extending toward the top right corner from the bottom left corner of the map screen page. Note that the specific values in the map of FIG. 8 are illustrated for an explanatory purpose for explaining relative relationship usable when determining the determination threshold ThV based on relation between the pointer (the cursor) 80 position and the moving direction D of the operation finger and the respective absolute values have no specific meanings.

In this example, the display control part 30 determines (changes) the determination threshold ThV based on the direction of the pointer 80 from the center of the map screen page and the moving direction D of the operation finger. Specifically, the display control part 30 reduces the determination threshold ThV, i.e., comes to more easily determine the performed operation as the flick operation, when the direction of the pointer 80 from the center of the map screen page is approximately the same as the moving direction D of the operation finger, or the difference in direction therebetween falls within a predetermined range, and also, the position of the pointer 80 is in the outer area of the map screen page, in comparison to the case of the printer being in the central area A11.

As shown in FIG. 8, when the moving direction D of the operation finger is the upward direction, for example, and when the position of the pointer 80 is in the central area A11, the determination threshold ThV has "83". In contrast thereto, when the position of the pointer 80 is in the upper area A12, the upper right area A22 or the upper left area A02, the determination threshold ThV has "45". Thus, in comparison to the case where the pointer 80 is in the central area A11, the display control part 30 comes to more easily determine the performed operation as the flick operation. That is, the display control part 30 comes to more easily determine the performed operation as the flick operation when the pointer 80 is positioned in the upper area A12 where the direction of the pointer 80 from the center of the map screen page is the same as the upward direction that is the moving direction D of the operation finger, or the upper right area A22 or the upper left area A02 where the difference in direction therebetween falls within a predetermined range. Similarly, when the moving direction D of the operation finger is the downward and rightward direction, for example, and when the position of the pointer 80 is in the central area A11, the determination threshold ThV has "157". In contrast thereto, when the position of the pointer 80 is in the lower area A10, the lower right area A20 or the right area A21, the determination threshold ThV has "127". Thus, in comparison to the case where the pointer 80 is in the central area A11, the display control part 30 comes to more easily determine the performed operation as the flick operation. That is, the display control part 30 comes to more easily determine the performed operation as the flick operation when the pointer 80 is positioned in the lower right area A20 where the direction of the pointer 80 from the center of the map screen page is the same as the downward and rightward direction that is the moving direction D of the operation finger, or the right area A21 or the lower area A10 where the difference in direction therebetween falls within a predetermined range.

Thus, the display control part 30 can positively determine the intentionally performed flick operation as the flick operation while avoiding erroneously determining the cursor operation as the flick operation. That is, when the pointer 80 is in the outer area of the map screen page and also the operation finger is moved toward the outer part of the map screen page, this operation is further likely to be an operation for "map scrolling" (the flick operation). That is, when the position of the pointer 80 is in the outer area of the map screen page and also the direction of the pointer 80 from the center of the map screen page is the same as the moving direction D of the operation finger or the difference in direction therebetween falls within a predetermined range, this operation is further likely to be an operation for "map scrolling" (the flick operation). Conversely, even when the position of the pointer 80 is in the outer area of the map screen page, if the difference in direction between the direction of the position of the pointer 80 from the center of the map screen page and the moving direction D of the operation finger is out of the predetermined range, this operation may also be the cursor operation. Thus, the display control part 30 can positively avoid erroneously determining the cursor operation as the flick operation while positively determining the intentionally performed flick operation as the flick operation by setting the determination threshold ThV smaller when the direction of the pointer 80 from the center of the map screen page is the same as the moving direction D of the operation finger or the difference in direction therebetween falls within a predetermined range.

In this example, first, the display control part 30 sets the determination threshold ThV to be smaller, i.e., makes it easier to determine the performed operation as the flick operation when the moving direction D of the operation finger is the upward direction than the downward direction. For example, in FIG. 8, when the moving direction D of the operation finger is the downward direction and also the pointer 80 is in the central area, the determination threshold ThV is "111" and the changed (reduced) determination threshold ThV is "90". In contrast thereto, when the moving direction D of the operation finger is the upward direction and also the pointer 80 is in the central area A11, the determination threshold ThV is "83" and the changed (reduced) determination threshold ThV is "45". Thus, in any case, the setting is made smaller than the case where the moving direction D of the operation finger is the downward direction. Thereby, the display control part can positively determine the intentionally performed flick operation as the flick operation. That is, there is such a general tendency that the moving speed of the operation finger in the upward direction on the operating surface of the touch pad 10 is lower than the moving speed of the operation finger in the downward direction. That is, from a viewpoint of the structure of the body of a human being, although moving of the operation finger in the downward direction can be made only by moving the joint of a finger, moving of the operation finger in the upward direction requires moving joints of an arm and/or shoulder. Therefore, it is difficult to increase the moving speed of the operation finger when moving the operation finger in the upward direction. Thus, by previously making it easier to determine the performed operation as the flick operation when the moving direction D of the operation finger is the upward direction than the downward direction, the display control part can further positively determine the intentionally performed flick operation as the flick operation.

Note that in this example, the determination threshold ThV is changed (reduced) when the pointer 80 is in the outer area. However, it is also possible that, in an easier manner, the determination threshold ThV is changed only based on the relationship between the direction of the pointer 80 from the center of the map screen page and the moving direction D of the operation finger. Specifically, it is possible that when the direction of the pointer 80 from the center of the map screen page is approximately the same as the moving direction D of the operation finger, or the difference in direction therebetween falls within a predetermined range, the display control part 30 reduces the determination threshold ThV so as to make it easier to determine the performed operation as the flick operation. Also by this way, the display control part can positively determine the intentionally performed flick operation as the flick operation while avoiding erroneously determining the cursor operation as the flick operation. That is, a case where the direction of the pointer 80 from the center of the map screen page is approximately the same as the moving direction D of the operation finger or the difference in direction therebetween falls within a predetermined range is a case where the operation finger is moved toward an outer part of the map screen page. It is thought that such an operation that the operation finger is moved toward an outer part of the map screen page is more likely to be the flick operation than such an operation that the operation finger is moved toward an inner part of the map screen page. Therefore, by reducing the determination threshold ThV and making it possible to more easily determine the performed operation as the flick operation, the display control part 30 can positively determine the intentionally performed flick operation as the flick operation. Conversely, the display control part 30 can avoid erroneously determining the cursor operation as the flick operation for such an operation that the operation finger is moved toward an inner part of the map screen page by previously setting the determination threshold ThV higher.

Also in this case, in the same manner as that in the above-described example, the display control part 30 changes the determination threshold ThV to reduce it as the position of the cursor becomes farther away from the center of the map screen page in two stages, i.e., the central area A11 and the outer area. However, it is also possible that the display control part 30 changes the determination threshold ThV more finely. At this time, it is possible to change the determination threshold ThV continuously or in a step-by-step manner.

The above-described methods of determining the determination threshold ThV have been described using the map screen page allowing scrolling in all directions on the screen. However, it is also possible that the display control part 30 determines (changes) the determination threshold ThV in the same manner also in a case where the scrolling direction is limited to predetermined axis directions such as "list scrolling".

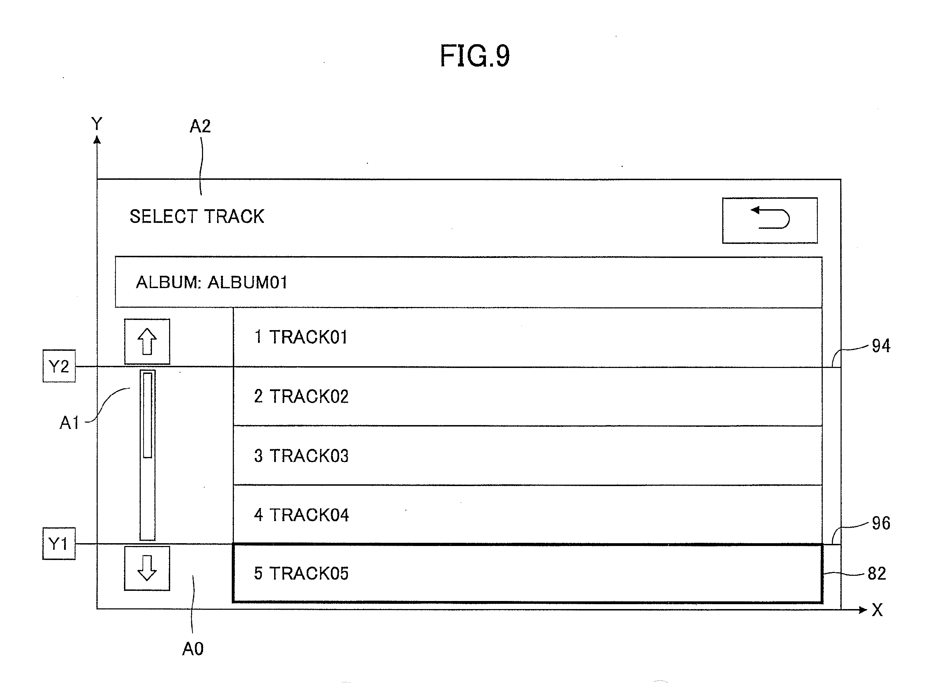

For example, FIG. 9 illustrates one example of a method of determining the determination threshold ThV by the display control part 30 when the display device 20 is displaying the track selecting screen page of the audio system. Specifically, virtual lines 94 and 96 are drawn in the track selecting screen page of the audio system shown in FIG. 5B, and thereby the track selecting screen page is divided into three areas. Specifically, the three areas are a lower area A0, a central area A1 and an upper area A2. In particular, such a setting is made that the upper area A2 includes the highest track of the track list including five tunes displayed in the upward and downward directions (the first one of the displayed tracks). Also, such a setting is made that the lower area A0 includes the lowest track of the track list (the fifth one of the displayed tracks). In FIG. 9, the x-y coordinate system is shown having the origin that is the bottom-left corner of the track selecting screen page. The virtual line 96 is a straight line parallel to the x-axis and having the y-coordinate value of "Y1". The virtual line 94 is a straight line parallel to the x-axis and having the y-coordinate value of "Y2". Note that the relationship of Y1<Y2<H holds assuming that the y-coordinate at the top end of the track selecting screen page is "H". Thus, the lower area A0 is an area defined by 0≦Y<Y1 in the track selecting screen page. Similarly, the central area A1 is an area defined by Y1≦Y<Y2 in the track selecting screen page. The upper area A2 is an area defined by Y2≦Y≦H in the track selecting screen page. Note that which of the areas divided by the virtual lines 94 and 96 includes the positions on each of the virtual lines 94 and 96 can be freely determined.

In this example, in the same way as that in the above-described example of the map screen page, the display control part 30 reduces the determination threshold ThV when the position of the cursor 82 is included in the outer area of the track selecting screen page (i.e., the lower area A0 or the upper area A2), in comparison to the case of it being included in the central area A1 of the track selecting screen page. That is, when the position of the cursor 82 is included in the outer area of the track selecting screen page, the display control part 30 more easily determines the performed operation as the flick operation in comparison to the case of it being included in the central area A1. In other words, the display control part 30 changes the determination threshold ThV so as to more easily determine the performed operation as the flick operation as the position of the cursor in the operating screen page becomes farther away from the center of the operating screen page. That is, the display control part 30 reduces the determination threshold ThV as the position of the cursor becomes farther away from the center of the operating screen page.

As shown in FIG. 9, the cursor 82 is positioned in the outer area (the lower area A0) in the state where the fifth tune "TRACK05" is selected. In this state, the display control part 30 changes the determination threshold ThV smaller in comparison to the case of the cursor 82 being included in the central area A1. Thereby, in the same manner as the above-described example of using the map screen page, the display control part 30 can positively determine the intentionally performed flick operation as the flick operation while avoiding erroneously determining the cursor operation as the flick operation.

Note that also in a case where the list strolling directions are the leftward and rightward directions, the same method of determining the determination threshold ThV can be applied as the above-described example where the list strolling directions are the upward and downward directions. Further, in the above-described example, the display control part 30 changes the determination threshold ThV to reduce it as the position of the cursor becomes farther away from the center of the track selecting screen page in two stages, i.e., the central area A1 and the outer area. However, it is also possible that the display control part 30 changes the determination threshold ThV more finely. At this time, it is possible to change the determination threshold ThV continuously or in a step-by-step manner.

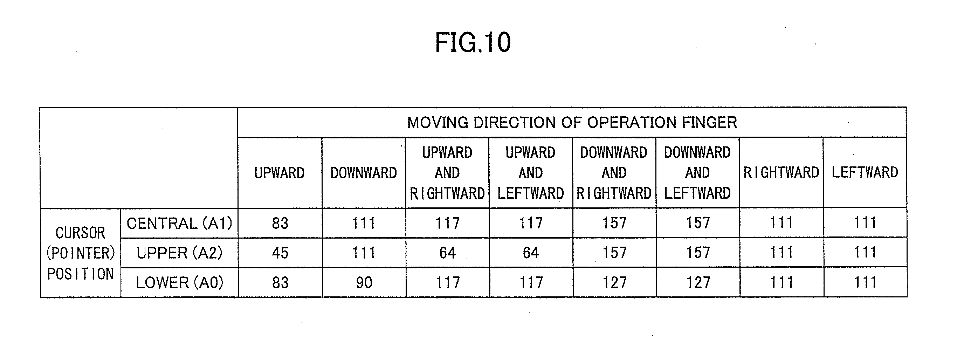

FIG. 10 illustrates another example of a method of determining the determination threshold ThV carried out by the display control part 30 when the display device 20 is displaying the track selecting screen page of the audio system. Specifically, in the same way as the above-described other example using the map screen page, FIG. 10 illustrates a map for determining the determination threshold ThV and is configured so as to be able to determine the determination threshold ThV using relationship between the position of the cursor 82 in the track selecting screen page and the moving direction D of the operation finger. Respective items of the cursor 82 position in this table denote, from the top, the central area A1, the upper area A2 and the lower area A0 in the track selecting screen page described above shown in FIG. 9. Also, respective items of the moving direction D of the operation finger on the operating surface of the touch pad 10 denote, from the left, the upward direction, the downward direction, the upward and rightward direction, the upward and leftward direction, the downward and rightward direction, the downward and leftward direction, the rightward direction and the leftward direction. Note that in the same manner as the above-described other example using the map screen page, the directions in the respective items of the moving direction D are prescribed to have, not specific directions but predetermined ranges (of angle). For example, the upward direction can be prescribed as directions included in a range of an angle measured clockwise and counterclockwise from the y-axis plus direction (i.e., the direction of increasing the y-coordinate) of FIG. 9. The upward and rightward direction can be prescribed as directions included in a range of an angle measured clockwise and counterclockwise from the diagonal direction extending toward the top right corner from the bottom left corner of the track selecting screen page. Note that the specific values in the map of FIG. 10 are illustrated for an explanatory purpose for explaining relative relationships usable when determining the determination threshold ThV based on relation between the cursor 82 position and the moving direction D of the operation finger, and the respective absolute values have no specific meaning.

In this example, in the same manner as the above-described other example using the map screen page, the display control part 30 determines (changes) the determination threshold ThV based on the direction of the cursor 82 from the center of the track selecting screen page and the moving direction D of the operation finger. Specifically, the display control part 30 reduces the determination threshold ThV, i.e., comes to more easily determine the performed operation as the flick operation, when the direction of the cursor 82 from the center of the track selecting screen page is approximately the same as the moving direction D of the operation finger, or the difference in direction therebetween falls within a predetermined range, and also, the position of the cursor 82 is in the outer area of the track selecting screen page, in comparison to the case of the cursor 82 being in the central area A1.

As shown in FIG. 10, when the moving direction D of the operation finger is the upward direction, for example, and when the position of the cursor 82 is in the central area A1, the determination threshold ThV has "83". In contrast thereto, when the position of the cursor 82 is in the upper area A2, the determination threshold ThV has "45". Thus, in comparison to the case where the cursor 82 is in the central area A1, the display control part 30 comes to more easily determine the performed operation as the flick operation. That is, the display control part 30 comes to more easily determine the performed operation as the flick operation when the cursor 82 is positioned in the upper area A2 where the direction of the cursor 82 from the center of the track selecting screen page is the same as the upward direction that is the moving direction D of the operation finger. Similarly, when the moving direction D of the operation finger is the downward and rightward direction, for example, and when the position of the cursor 82 is in the central area A1, the determination threshold ThV has "157". In contrast thereto, when the position of the cursor 82 is in the lower area A0, the determination threshold ThV has "127". Thus, in comparison to the case where the cursor 82 is in the central area A1, the display control part 30 comes to more easily determine the performed operation as the flick operation. That is, the display control part 30 comes to more easily determine the performed operation as the flick operation when the cursor 82 is positioned in the lower area A0 where the difference in direction between the downward and rightward direction that is the moving direction D of the operation finger and the direction of the cursor 82 from the center of the track selecting screen page falls within a predetermined range.

Thereby, in the same way as the above-described other example using the map screen page, the display control part 30 can positively determine the intentionally performed flick operation as the flick operation while positively avoiding erroneously determining the cursor operation as the flick operation.

In this example, in the same way as the above-described other example using the map screen page, first, the display control part 30 sets the determination threshold ThV to be smaller, i.e., makes it easier to determine the performed operation as the flick operation when the moving direction D of the operation finger is the downward direction rather than the upward direction. For example, in FIG. 10, when the moving direction D of the operation finger is the downward direction and also the cursor 82 is in the central area A1, the determination threshold ThV is "111" and the changed (reduced) determination threshold ThV is "90". In contrast thereto, when the moving direction D of the operation finger is the upward direction and also the cursor 82 is in the central area A1, the determination threshold ThV is "83" and the changed (reduced) determination threshold ThV is "45". Thus, in any case, the setting is made smaller than the case where the moving direction D of the operation finger is the downward direction. Thereby, in the same way as the above-described other example using the map screen page, the display control part can more positively determine the intentionally performed flick operation as the flick operation.

Note that in this example, the determination threshold ThV is changed (reduced) when the cursor 82 is in the outer area. However, it is also possible that, in an easier manner, the determination threshold ThV is changed only based on the relationship between the direction of the cursor 82 from the center of the track selecting screen page and the moving direction D of the operation finger. Specifically, it is possible that when the direction of the pointer 80 from the center of the track selecting screen page is approximately the same as the moving direction D of the operation finger, or the difference in direction therebetween falls within a predetermined range, the display control part 30 reduces the determination threshold ThV so as to make it easier to determine the performed operation as the flick operation. Also by this way, in the same way as the above-described other example using the map screen page, the display control part can determine the intentionally performed flick operation as the flick operation while avoiding erroneously determining the cursor operation as the flick operation.

Note that also in a case where the list strolling directions are the leftward and rightward directions, the same method of determining the determination threshold ThV can be applied. Also, in this case, the display control part 30 changes the determination threshold ThV to reduce it as the position of the cursor becomes farther away from the center of the track selecting screen page in two stages, i.e., the central area A1 and the outer area. However, it is also possible that the display control part 30 changes the determination threshold ThV more finely. At this time, it is possible to change the determination threshold ThV continuously or in a step-by-step manner.

Thus, the vehicle operation apparatus has been described by the embodiment. However, the present invention is not limited to the specific embodiment, and variations, modifications and/or replacements can be made in embodiments without departing from the scope of the present invention claimed.

For example, in the vehicle operation apparatus 1 according to the present embodiment, the display device 20 is remotely placed away from the touch pad 10 that is an operating part. However, the touch pad 10 and the display device 20 can be configured integrally. That is, the display device 20 can be configured in a form of a touch panel display device that allows a touch operation, and an operation can be performed on the operating screen page through an operation performed on the touch panel in the display device 20. Also in this case, the same advantageous effects are acquired as those of the above-described embodiment.

Thus, according to the embodiment, it is possible to provide a vehicle operation apparatus by which, for example, in a case where the cursor operation and the flick operation are performed on a touch panel by one finger, it is possible to positively determine the flick operation that is performed intentionally as the flick operation while preventing the cursor operation from being erroneously determined as the flick operation.

The present application is based on and claims the benefit of priority of Japanese Priority Application No. 2014-046609, filed on March 10, 2014, the entire contents of which are hereby incorporated herein by reference.

A vehicle operation apparatus is provided for performing an operation on a screen page displayed on a display device using a touch panel. The vehicle operation apparatus includes an operation determination part configured to determine whether a cursor operation of moving a cursor in the screen page by touching the touch panel by an operation finger and sliding the operation finger on the touch panel or a flick operation of scrolling an operation target in the screen page by touching and flicking the touch panel by the operation finger is performed. The operation determination part is configured to change a threshold for determining the performed operation as the flick operation depending on a position of the cursor.

## Claims

1. A vehicle operation apparatus for performing an operation on a screen page displayed on a display device using a touch panel, the vehicle operation apparatus comprising:
an operation determination part configured to determine whether a cursor operation of moving a cursor in the screen page by touching the touch panel by an operation finger and sliding the operation finger on the touch panel or a flick operation of scrolling an operation target in the screen page by touching and flicking the touch panel by the operation finger is performed, wherein
the operation determination part is configured to change a threshold for determining the performed operation as the flick operation depending on a position of the cursor.

2. The vehicle operation apparatus as claimed in claim 1, wherein
the display device is configured to be placed at a remote place with respect to the touch panel.

3. The vehicle operation apparatus as claimed in claim 1 or 2, wherein
the operation determination part is configured to change the threshold so as to more easily determine the performed operation as the flick operation in a case where the position of the cursor is in an outer area of the screen page than a case where the position of the cursor is in a central area of the screen page.

4. The vehicle operation apparatus as claimed in claim 1 or 2, wherein
the operation determination part is configured to change the threshold so that, the farther the cursor becomes away from the center of the screen page, the more the operation determination part comes to easily determine the performed operation as the flick operation.

5. The vehicle operation apparatus as claimed in any one of claims 1-4, wherein
the operation determination part is configured to change the threshold based on a direction of the position of the cursor from the center of the screen page and a direction of moving of the operation finger on the touch panel.

6. The vehicle operation apparatus as claimed in any one of claims 1-5, wherein
the operation determination part is configured to change the threshold so as to more easily determine the performed operation as the flick operation when a direction of the position of the cursor from the center of the screen page is the same as a direction of moving of the operation finger on the touch panel.

7. The vehicle operation apparatus as claimed in any one of claims 1-6, wherein
the operation determination part is configured to make it easier to determine the performed operation as the flick operation in a case where a moving direction of the operation finger on the touch panel is an upward direction than a case of a downward direction.
